# EUROPÄISCHE PATENTANMELDUNG

(11) **EP 1 230 848 A1**
(43) Veröffentlichungstag der Anmeldung: **14.08.2002**
(21) Anmeldenummer: 02002316.4
(22) Anmeldetag: 31.01.2002
(51) Int. Cl.: A01K 27/00

(54) **Sicherheitshundeleine**

(30) Priorität: 12.02.2001 DE 20102597 U
(71) Anmelder: Meissner, Uwe, 67249 Grossniedesheim (DE)
(72) Erfinder: Meissner, Uwe, 67249 Grossniedesheim (DE)
(74) Vertreter: Fischer, Wolf-Dieter, Dipl.-Ing.

(57) **Zusammenfassung**

Die Sicherheitshundeleine besitzt an einem Ende eine Halteschlaufe 3 und an dem anderen Ende einen Befestigungshaken 1. Der Befestigungshaken 1 weist einen zu öffnenden Hakenverschluss auf, der mittels einer federbelasteten Handhabe 5 betätigbar ist.

## Beschreibung

Die Erfindung betrifft eine Sicherheitshundeleine mit an einem Ende angeordneter Halteschlaufe und an dem anderen Ende angebrachtem Befestigungshaken.

Üblicherweise besitzen derartige Hundeleinen an Ihrem einen Ende einen Befestigungshaken, mit dem die Hundeleine beispielsweise an einem Halsband des Tieres befestigt wird. Als Befestigungshaken verwendet man Karabiner- oder Scherenhaken. Am anderen Ende der Hundeleine befindet sich eine Halteschlaufe.

Der wesentliche Nachteil dieser bekannten Ausführungsform besteht darin, dass bei einem Zug auf die Leine, zum Beispiel, wenn das Tier an der Leine zieht, sich diese nur sehr schlecht von dem Halsband lösen läßt. Bei Hunden im Polizeieinsatz, beim Grenzschutz oder bei Wachfirmen ist es oftmals notwendig, den Hund für den Einsatz von der Leine loszulassen, wobei das Ableinen so rasch als möglich erfolgen muss, da ansonsten die Begleitpersonen des Hundes gefährdet sind.

Der Erfindung liegt die Aufgabe zugrunde eine Sicherheitshundeleine vorzuschlagen, die ein einfaches und rasches Ableinen des Hundes ermöglicht.

Diese Aufgabe wird nach der Erfindung dadurch gelöst, dass der Befestigungshaken einen zu öffnenden Hakenverschluss aufweist, der mittels einer federbelasteten Handhabe betätigbar ist.

Eine vorteilhafte Ausführungsform sieht vor, dass der Hakenverschluss zwischen ösenartig ausgeformten Hakenteilen verschwenkbar angeordnet ist und dass die Handhabe als Schieber auf dem Hakenteil des Befestigungshakens von einer Schließstellung in eine Öffnungsstellung verschiebbar ist.

Weiterhin ist es vorteilhaft, dass an der Leine ein Zugseil angeordnet ist, das an dem Schieber befestigt ist und mit einer Zugschlaufe im Bereich der Halteschlaufe endet.

Weiterhin ist es vorteilhaft, dass an der Leine eine zusätzliche Halteschlaufe angeordnet ist.

Die Erfindung bringt den wesentlichen Vorteil, dass der Hund mit einem einfachen Handgriff abgeleint werden kann, so dass in gefahrvollen Situationen keine zeitaufwendigen und problematischen Handhabungen für das Ableinen, insbesondere wenn die Leine auf Zug beansprucht ist, notwendig wird.

Die Erfindung wird in der nachfolgenden Beschreibung anhand eines in der Zeichnung dargestellten Ausführungsbeispiels näher erläutert.

Es zeigen,

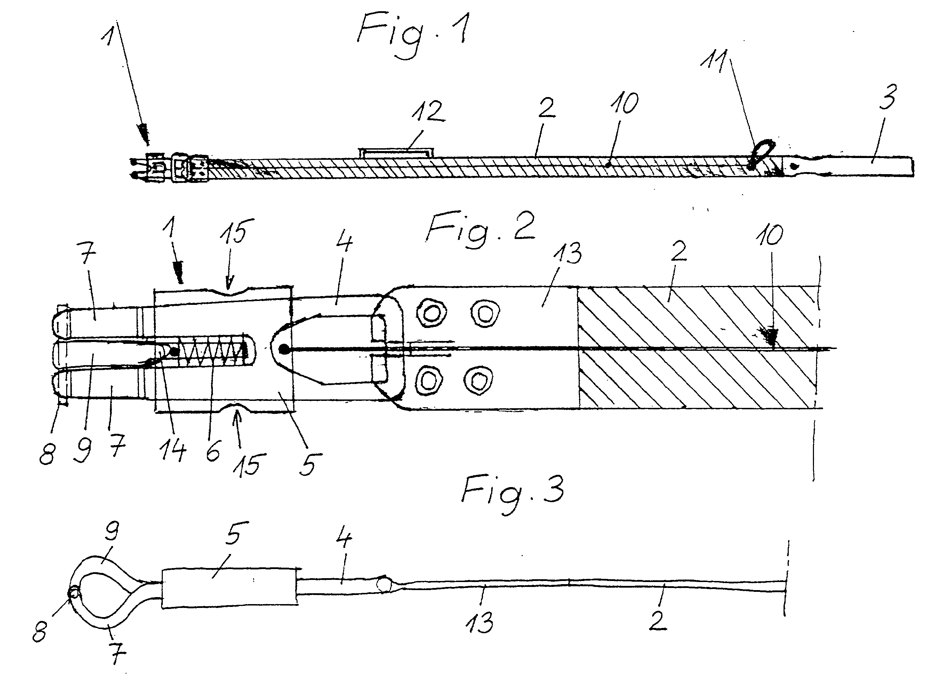

- Fig. 1: eine Ansicht einer Sicherheitshundeleine nach der Erfindung,
- Fig.2: eine Ansicht des Befestigungshakens und
- Fig. 3: einen Grundriss von Fig. 2

Die in der Zeichnung dargestellte Hundeleine 2 besitzt an ihrem einen Ende einen Befestigungshaken 1 und an ihrem anderen Ende eine Halteschlaufe 3. Mit dem Befestigungshaken 1 wird sie beispielsweise an einem Halsband des Hundes eingehängt. Zur Verkürzung der Halteposition kann an der Hundeleine 2 eine zusätzliche Halteschlaufe 12 vorgesehen sein.

Der an der Hundeleine vorgesehene Befestigungshaken ist besonders ausgebildet. Das Ende 13 der Hundeleine 2 ist an einem flachen Hakenteil 4 befestigt, auf dem verschiebbar eine Handhabe bzw. Schieber 5 angeordnet ist. Dieses Hakenteil ist gegen sein Ende hin U-förmig ausgebildet, wobei zwei parallele Hakenteile 7 ösenartig ausgeformt sind. Zwischen diesen Hakenteilen 7 befindet sich ein entgegen ausgeformter Hakenverschluss 9, der an einer Achse 8 an den Enden der Hakenteile 7 verschwenkbar angeordnet ist.

Der Schieber 5 wird mittels einer Feder 6 gegen die Achse 8 hin und gegen einen Anschlag am Hakenteil 4 gedrückt, wobei in der am Anschlag anliegenden Endstellung sich ein Endteil 14 des Hakenverschlusses 9 innerhalb des Schiebers 5 befindet und damit festgehalten wird. Die Hakenteile 7 und der Hakenverschluss 9 bilden hierbei eine Öse 13, die am Halsband des Hundes eingehängt ist. Durch ein Verschieben in die entgegengesetzte Richtung wird das Endteil 14 freigegeben und öffnet sich unter der Zugeinwirkung an der Hundeleine 2, so dass damit das Tier abgeleint wird.

An dem Schieber 5 befinden sich seitliche Einkerbungen 15, die ein einfaches Handhaben erleichtern. Für eine Bedienung des Schiebers 5 von der Halteschlaufe 3 aus, kann zusätzlich an dem Schieber ein Zugseil 10 befestigt sein, dessen Zugschlaufe 11 nahe der Halteschlaufe 3 endet.

## Patentansprüche

1. Sicherheitshundeleine mit an einem Ende angeordneter Haltschlaufe und an dem anderen Ende angebrachtem Befestigungshaken, **dadurch gekennzeichnet, dass** der Befestigungshaken (1) einen zu öffnenden Hakenverschluss (9) aufweist, der mittels einer federbelasteten Handhabe (5) betätigbar ist.

2. Hundeleine nach Anspruch 1, **dadurch gekennzeichnet, dass** der Hakenverschluss (9) zwischen ösenartig ausgeformten Hakenteilen (7) verschwenkbar angeordnet ist und dass die Handhabe (1) als Schieber (5) auf dem Hakenteil (4) des Befestigungshakens (1) von einer Schließstellung in eine Öffnungsstellung verschiebbar ist.

3. Hundeleine nach Anspruch 1 oder 2, **dadurch gekennzeichnet, dass** an der Leine (2) ein Zugseil (10) angeordnet ist, das an dem Schieber (5) befestigt ist und mit einer Zugschlaufe (11) im Bereich der Halteschlaufe (3) endet.

4. Hundeleine nach Anspruch 1 bis 3, **dadurch gekennzeichnet, dass** an der Leine (2) eine zusätzliche Halteschlaufe (12) angeordnet ist.
